# EUROPÄISCHE PATENTSCHRIFT

(11) **EP 3 503 313 B1**
(45) Veröffentlichungstag und Bekanntmachung des Hinweises auf die Patenterteilung: **09.02.2022**
(21) Anmeldenummer: 17208973.2
(22) Anmeldetag: 20.12.2017
(51) Int. Cl.: H01R 31/06, B62M 6/90

(54) **MEHRBATTERIE-ADAPTER ZUR HERSTELLUNG EINER ELEKTRISCHEN VERBINDUNG ZWISCHEN MINDESTENS ZWEI TRAKTIONSBATTERIEN EINERSEITS UND EINER ANTRIEBSEINHEIT EINES ELEKTROFAHRRADES ANDERERSEITS**
MULTI-BATTERY ADAPTER FOR ESTABLISHING AN ELECTRICAL CONNECTION BETWEEN AT LEAST TWO TRACTION BATTERIES ON THE ONE HAND AND A DRIVE UNIT OF AN ELECTRICAL BICYCLE ON THE OTHER
ADAPTATEUR DE BATTERIES MULTIPLES PERMETTANT D'ÉTABLIR UNE CONNEXION ÉLECTRIQUE ENTRE AU MOINS DEUX BATTERIES DE TRACTION D'UN CÔTÉ ET UNE UNITÉ DE TRANSMISSION D'UNE BICYCLETTE ÉLECTRIQUE D'UN AUTRE CÔTÉ

(43) Veröffentlichungstag der Anmeldung: 26.06.2019
(73) Patentinhaber: Amprio GmbH, 41460 Neuss (DE)
(72) Erfinder: GREVEN, Dietmar, 41541 Dormagen (DE); KRILL, Thorsten, 75050 Gemmingen (DE); BAUMANN, Alexander, 73760 Ostfildern (DE)
(74) Vertreter: terpatent Patentanwälte ter Smitten Eberlein-Van Hoof Rütten Daubert

(56) Entgegenhaltungen:
- EP-A1- 2 386 474
- EP-A2- 2 953 183
- DE-A1-102009 046 967
- DE-U1-202015 002 905

## Beschreibung

Die Erfindung betrifft einen Mehrbatterle-Adapter zur Herstellung einer elektrischen Verbindung zwischen mindestens zwei Traktionsbatterien einerseits und einer Antriebseinheit eines Elektrofahrrades andererseits.

Ein Elektrofahrrad weist üblicherweise eine elektrische Antriebseinheit auf, welche mit einer Traktionsbatterie elektrisch verbunden ist. Eine wichtige Eigenschaft eines derartigen Elektrofahrrades ist die Reichweite, mit der das Elektrofahrrad durch die Antriebseinheit unterstützend betrieben werden kann, wobei die Reichweite durch die Kapazität der Traktionsbatterie begrenzt ist. Zur Erhöhung der Reichweite wird üblicherweise eine zusätzliche Traktionsbatterie am Elektrofahrrad vorgesehen und mit der Antriebseinheit elektrisch verbunden.

Ein Elektrofahrrad mit mehreren Traktionsbatterien offenbart beispielsweise die DE 10 2015 209 029 A1, wobei das Elektrofahrrad eine erste Traktionsbatterie und eine zweite Traktionsbatterie aufweist. Die beiden Traktionsbatterien sind über einen Mehrbatterie-Adapter mit einer Antriebseinheit elektrisch verbunden. Außerdem sind die beiden Traktionsbatterien über jeweils eine Signalleitung mit einer Steuerungseinheit verbunden, wobei über die Steuerungseinheit der Auflade- und der Entladevorgang der Traktionsbatterien gesteuert wird. Außerdem offenbart die DE 20 2015 002 905 U1 ein Elektrofahrrad mit einer festverbauten ersten Traktionsbatterie, wobei das Elektrofahrrad zur Erhöhung der Reichweite mit einer zweiten Traktionsbatterie ergänzt werden kann.

DE 10 2009 046967 A1 offenbart einen Mehrbatterie-Adapter nach dem Oberbegriff des Anspruchs 1.

Der Erfindung liegt die Aufgabe zugrunde, einen Mehrbatterie-Adapter derart weiterzuentwickeln, dass ein Elektrofahrrad einfach und ohne Anpassungen der Traktionsbatterie oder der Antriebseinheit mit einer zusätzlichen Traktionsbatterie erweitert werden kann.

Diese Aufgabe wird durch einen Mehrbatterie-Adapter mit den Merkmalen des Hauptanspruchs gelöst.

Der Mehrbatterie-Adapter weist einen Antriebseinheit-Steckverbinder und mindestens zwei Batterie-Steckverbinder auf. Der Antriebseinheit-Steckverbinder ist mit einer Antriebseinheit des Elektrofahrrades elektrisch verbindbar.

Dabei kann der Antriebseinheit-Steckverbinder als Stecker ausgeführt sein und die Antriebseinheit eine zum Antriebseinheit-Steckverbinder korrespondierende Buchse aufweisen. Alternativ kann der Antriebseinheit-Steckverbinder als Buchse ausgeführt sein und die Antriebseinheit einen Stecker aufweisen. Die mindestens zwei Batterie-Steckverbinder sind jeweils mit einer Traktionsbatterie elektrisch verbindbar,

wobei die Batterie-Steckverbinder als Stecker ausgestaltet sind und jede Traktionsbatterien eine zum Batterie-Steckverbinder korrespondierende Buchse aufweist. Alternativ können die Traktionsbatterien einen Stecker aufweisen und die Batterie-Steckverbinder als Buchsen ausgeführt sein.

Der Mehrbatterie-Adapter weist außerdem eine Steuerungseinheit auf, welche ein eigenständiges Batteriemanagementmodul und einen Versorgungsschalter aufweist. Das eigenständige Batteriemanagementmodul wird unabhängig von dem Steuergerät der Antriebseinheit und unabhängig von den Batterieüberwachungsmodulen der Traktionsbatterien betrieben.

Der Versorgungsschalter ist batterieseitig mit den Traktionsbatterien und antriebseinheitseitig mit der Antriebseinheit über jeweils eine elektrische Versorgungsleitung verbunden. Das Batteriemanagementmodul ist über eine Signalverbindung mit dem Versorgungsschalter verbunden, wobei der Versorgungsschalter über das Batteriemanagementmodul gesteuert wird. Dabei steuert das Batteriemanagementmodul den Versorgungsschalter derart an, dass eine elektrische Verbindung zwischen der Antriebseinheit und einer ersten Traktionsbatterie und/oder einer zweiten Traktionsbatterie hergestellt wird.

Auf diese Weise können unterschiedliche Entladestrategien realisiert werden, wobei in einer ersten Entladestrategie beide Traktionsbatterien in einem kontinuierlichen Wechsel entladen werden und die Antriebseinheit durch beide Traktionsbatterien mit elektrischer Energie versorgt werden. In einer zweiten Entladestrategie werden die Traktionsbatterien nacheinander entladen, wobei zunächst die erste Traktionsbatterie vollständig entladen wird und nachfolgend die zweite Traktionsbatterie mit der Antriebseinheit elektrisch gekoppelt wird.

Durch einen derartig ausgestalteten Mehrbatterie-Adapter kann ein Elektrofahrrad mit einer einzigen ersten Traktionsbatterie einfach mit einer zusätzlichen zweiten Traktionsbatterie ausgestattet werden, wobei alle für die Erweiterung des Elektrofahrrades mit einer zusätzlichen Traktionsbatterie benötigten Komponenten und Funktionen im Mehrbatterie-Adapter integriert sind. Eine Anpassung des Steuergeräts der Antriebseinheit oder eines Batterieüberwachungsmoduls in der Traktionsbatterie ist nicht erforderlich. Insbesondere sind dafür keine zusätzlichen Steuerungsfunktionen in der Steuerungseinheit der Antriebseinheit oder in den Batterieüberwachungsmodulen erforderlich. Das Batteriemanagementmodul ist über jeweils eine Batterie-Signalleitung mit einem Batterieüberwachungsmodul der ersten Traktionsbatterie und einem Batterieüberwachungsmodul der zweiten Traktionsbatterie verbindbar und ist über eine einzige Antriebseinheit-Signalleitung mit einem Steuergerät der Antriebseinheit verbindbar.

Die Batterieüberwachungsmodule sind elektronische Steuerungen, welche die Traktionsbatterien überwachen und dadurch einen vorzeitigen Ausfall der Traktionsbatterien verhindern. Außerdem werden in den Batterieüberwachungsmodulen Traktionsbatterie-Parameter, beispielsweise die Kapazität und die Ladezyklenanzahl der Traktionsbatterie, gespeichert, welche über die Batterie-Signalleitung an das Batteriemanagementmodul übertragen werden. Die Kapazität dient unter anderem als Basis für die Berechnung der in einem Benutzerbedienelement angezeigten Reichweite des Elektrofahrrades. Vorzugsweise weist das Batteriemanagementmodul einen Gesamtkapazitätssummierer auf, wobei der Gesamtkapazitätssummierer die Kapazitäten der einzelnen Traktionsbatterien addiert. Die summierte Kapazität wird über einen Einbatterie-Simulator an die Steuereinheit der Antriebseinheit übermittelt. Auf diese Weise kann die Steuereinheit der Antriebseinheit unabhängig von der Anzahl der Traktionsbatterien ausgestaltet werden, da unabhängig davon, ob eine einzige Traktionsbatterie oder mehrere Traktionsbatterien, welche über den Mehrbatterie-Adapter mit der Antriebseinheit verbunden sind, eine einzige Kapazität an die Steuerungseinheit der Antriebseinheit übermittelt wird. Die Berechnung der Reichweite basiert auf dieser durch den Einbatterie-Simulator übermittelten Kapazität.

In einer vorteilhaften Ausgestaltung sind der Antriebseinheit-Steckverbinder und die Batterie-Steckverbinder mechanisch komplementär ausgeführt. Beispielsweise ist der Antriebseinheit-Steckverbinder als Buchse ausgeführt, wobei die Antriebseinheit einen dazu korrespondierenden Stecker aufweist, und der Batterie-Steckverbinder als Stecker ausgeführt, wobei die Traktionsbatterien jeweils eine Buchse aufweisen. Dadurch, dass die Antriebseinheit einen Stecker und die Traktionsbatterien jeweils eine Buchse aufweisen, kann die Antriebseinheit auf eine einfache Weise entweder mit einer einzigen Traktionsbatterie oder, unter Verwendung des Zweibatterie-Adapters, mit mehreren Traktionsbatterien verbunden werden.

Ein Ausführungsbeispiel der Erfindung wird anhand der Zeichnungen näher erläutert.

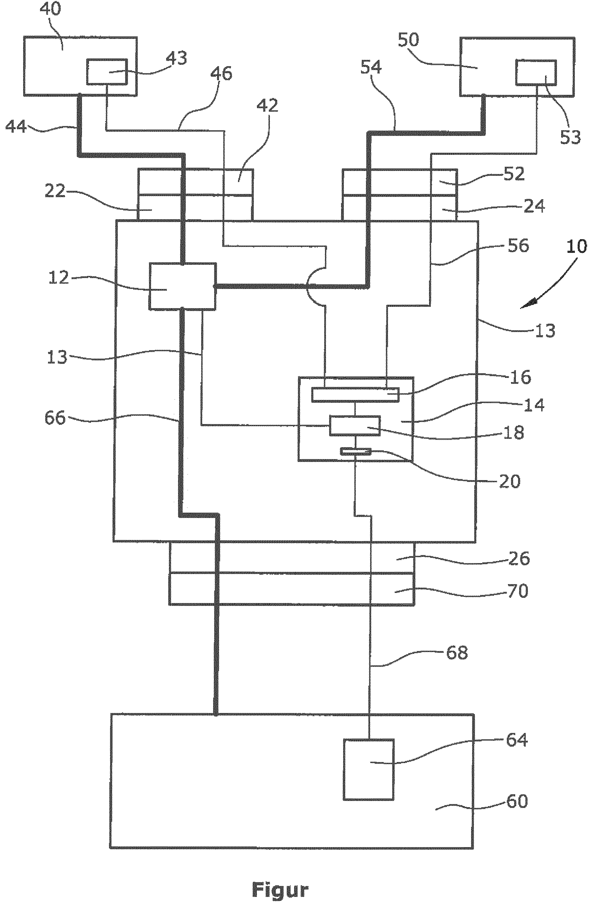

Die Figur 1 zeigt schematisch einen Mehrbatterie-Adapter.

Die Figur 1 zeigt einen Mehrbatterie-Adapter 10, welcher mit einer Elektrofahrrad-Antriebseinheit 60 einerseits und mit zwei Traktionsbatterien 40, 50 andererseits elektrisch verbunden ist.

Der Mehrbatterie-Adapter 10 weist ein Adaptergehäuse 13 auf, in dem eine Steuerungseinheit 14 und ein Versorgungsschalter 12 angeordnet sind. Der Versorgungsschalter 12 ist mit einem Batteriemanagementmodul 18 der Steuerungseinheit 14 verbunden, wobei der Versorgungsschalter 12 über das Batteriemanagementmodul 18 gesteuert wird.

Der Versorgungsschalter 12 ist über eine erste Batterie-Versorgungsleitung 44 mit einer ersten Traktionsbatterie 40 und über eine zweite Batterie-Versorgungsleitung 54 mit einer zweiten Traktionsbatterie 50 elektrisch verbunden. Außerdem ist der Versorgungsschalter 12 über eine einzige Antriebseinheit-Versorgungsleitung 66 mit der Antriebseinheit 60 elektrisch verbunden.

Im Betrieb der Antriebseinheit 60 wird die Antriebseinheit 60 nacheinander durch die erste Traktionsbatterie 40 und die zweite Traktionsbatterie 50 mit elektrischer Energie versorgt. Die Ansteuerung der Traktionsbatterien 40, 50 erfolgt durch den Versorgungsschalter 12, wobei der Versorgungsschalter 12 derart von dem Batteriemanagement 18 angesteuert wird, dass der Versorgungsschalter 12 zwischen einer ersten Schaltstellung, in der die erste Traktionsbatterie 40 mit der Antriebseinheit 60 elektrisch verbunden ist, und einer zweiten Schaltstellung, in der die zweite Traktionsbatterie 50 mit der Antriebseinheit 60 elektrisch verbunden ist, verstellt wird.

Die Steuerungseinheit 14 weist außerdem einen Gesamtkapazitätssummierer 16 auf. Der Gesamtkapazitätssummierer 16 ist über eine erste Signalleitung 46 mit einem Batterieüberwachungsmodul 43 der ersten Traktionsbatterie 40 und über eine zweite Signalleitung mit einem Batterieüberwachungsmodul 53 der zweiten Traktionsbatterie 50 verbunden.

Der Gesamtkapazitätssummierer 16 dient dazu, die einzelnen Kapazitäten der beiden Traktionsbatterien 40, 50 aufzusummieren, wobei die summierte Kapazität über einen Einbatterie-Simulator 20 sowie über eine einzige Antriebseinheit-Signalleitung 68 an die Steuerungseinheit 64 der Antriebseinheit 60 übermittelt wird. Durch den Einbatterie-Simulator 20 wird der Steuereinheit 64 der Antriebseinheit 60 vorgetäuscht, dass nur eine einzige Traktionsbatterie 40, 50 angeschlossen ist. Auf diese Weise kann die Steuerungseinheit 64 unabhängig von der Anzahl der vorgesehenen Traktionsbatterien ausgestaltet werden.

Die Verbindungen zwischen den beiden Traktionsbatterien 40, 50 und dem ZweibatterIe-Adapter 10 erfolgen über jeweils einen Batterie-Steckverbinder 22, 24 und jeweils einer dazu korrespondierenden und an den Traktionsbatterien 40, 50 angeordneten Komponente. Der Batterie-Steckverbinder 22 ist als Stecker ausgeführt, welcher mit einer an der ersten Traktionsbatterie 40 ausgebildeten Buchse 42 verbunden ist. Über den Batterie-Steckverbinder 22 sowie die Buchse 42 verlaufen die erste Batterie-Versorgungsleitung 44 und die erste Signalleitung 46. Der Batterie-Steckverbinder 24 ist mit einer an der zweiten Traktionsbatterie 50 ausgebildeten Buchse 52 verbunden, wobei über den Batterie-Steckverbinder 24 sowie die Buchse 52 die zweite Batterie-Versorgungsleitung 54 und die erste Signalleitung 56 verlaufen.

Die Verbindung zwischen der Antriebseinheit 60 und dem Mehrbatterie-Adapter 10 erfolgt über einen an dem Zweibatterie-Adapter 10 ausgebildeten Antriebseinheit-Steckverbinder 26, welcher als Buchse ausgestaltet ist. Der Antriebseinheit-Steckverbinder 26 ist mit einem an der Antriebseinheit 60 ausgebildeten Stecker 70 verbunden. Über den Antriebseinheit-Steckverbinder 26 sowie die Stecker 70 verlaufen die Antriebseinheit-Versorgungsleitung 66 und die Antriebseinheit-Signalleitung 68.

Die Batterie-Steckverbinder 22, 24 und der Stecker 70 sind identisch ausgeführt. Die Buchsen 42, 52 und der Antriebseinheit-Steckverbinder 26 sind ebenfalls identisch ausgeführt. Dabei kann der Stecker 70 mit einer der beiden Buchsen 42, 52 der Traktionsbatterien 40, 50 einzeln oder mit dem als Buchse ausgeführten Antriebseinheit-Steckverbinder 26 des Mehrbatterie-Adapters 10 verbunden werden. Auf diese Weise können die Traktionsbatterien 40, 50 sowie die Antriebseinheit 60 unabhängig von der Anzahl der Traktionsbatterien 40, 50 des Elektrofahrrades ausgestaltet werden, wobei bei einem Elektrofahrrad mit mehreren Traktionsbatterien 40, 50 die Traktionsbatterien 40, 50, nicht wie bei einem Elektrofahrrad mit nur einer einzigen Traktionsbatterie 40 direkt, sondern über den Mehrbatterie-Adapter 10 mit der Antriebseinheit 60 verbunden werden.

Es sollte deutlich sein, dass auch andere konstruktive Ausführungsformen des Mehrbatterie-Adapters im Vergleich zur beschriebenen Ausführungsform möglich sind, ohne den Schutzbereich des Hauptanspruchs zu verlassen.

## Patentansprüche

1. Mehrbatterie-Adapter (10) zur Herstellung einer elektrischen Verbindung zwischen mindestens zwei Traktionsbatterien (40, 50) einerseits und einer Antriebseinheit (60) eines Elektrofahrrades andererseits, mit mindestens zwei Batterie-Steckverbindern (22, 24), wobei die mindestens zwei Batterie-Steckverbinder (22, 24) mit jeweils einer Traktionsbatterie (40, 50) elektrisch verbindbar sind, wobei ein erster Batterie-Steckverbinder (22) mit einer ersten Traktionsbatterie (40) und ein zweiter Batterie-Steckverbinder (24) mit einer zweiten Traktionsbatterie (50) elektrisch verbindbar sind, einer Steuerungseinheit (12), welche ein eigenständiges Batteriemanagementmodul (18) aufweist, wobei das Batteriemanagementmodul (18) über jeweils eine Batterie-Signalleitung (46, 56) des Mehrbatterie-Adapters (10) mit der ersten Traktionsbatterie (40) und mit der zweiten Traktionsbatterie (50) verbindbar ist, und einem Versorgungsschalter (12), wobei der Versorgungsschalter (12) derart durch das Batteriemanagementmodul (18) ansteuerbar ist, dass eine elektrische Versorgungsverbindung (66) zwischen der Antriebseinheit (60) und der ersten Traktionsbatterie (40) und/oder der zweiten Traktionsbatterie (50) herstellbar ist, **dadurch gekennzeichnet, dass** der Mehrbatterie-Adapter (10) einen Antriebseinheit-Steckverbinder (26) aufweist, der mit der Antriebseinheit (60) elektrisch verbindbar ist, und das Batteriemanagementmodul (18) über eine einzige Antriebseinheit-Signalleitung (68) des Mehrbatterie-Adapters (10) mit der Antriebseinheit (60) verbindbar ist.

2. Mehrbatterie-Adapter (10) nach Anspruch 1,
**dadurch gekennzeichnet, dass**
das Batteriemanagementmodul (18) einen Gesamtkapazitätssummierer (16) aufweist.

3. Mehrbatterie-Adapter (10) nach einem der vorhergehenden Ansprüche,
**dadurch gekennzeichnet, dass**
der Antriebseinheit-Steckverbinder (26) und die Batterie-Steckverbinder (22, 24) mechanisch komplementär zueinander ausgeführt sind.

4. Elektrofahrrad mit
einer Antriebseinheit (60),
mindestens zwei Traktionsbatterien (40, 50) und
einem Mehrbatterie-Adapter (10) nach einem der Ansprüche 1 bis 3.

## Claims

1. Multi-battery adapter (10) for providing an electrical connection between at least two traction batteries (40, 50) on the one hand and a drive unit (60) of an electric bicycle on the other hand, comprising at least two battery connectors (22, 24), wherein the at least two battery connectors (22, 24) are electrically connectable to a traction battery (40, 50), respectively, wherein a first battery connector (22) is electrically connectable to a first traction battery (40) and a second battery connector (24) is electrically connectable to a second traction battery (50)
a control unit (12) comprising an independent battery management module (18), the battery management module (18) being connectable to the first traction battery (40) and to the second traction battery (50) via respectively one battery signal line (46, 56) of the multi-battery adapter (10), and
a supply switch (12), wherein the supply switch (12) can be controlled by the battery management module (18) in such a way that an electrical supply connection (66) can be established between the drive unit (60) and the first traction battery (40) and/or the second traction battery (50),
**characterized in that**
the multi-battery adapter (10) has a drive unit connector (26) which can be electrically connected to the drive unit (60), and the battery management module (18) can be connected to the drive unit (60) via a single drive unit signal line (68) of the multi-battery adapter (10).

2. Multi-battery adapter (10) according to claim 1,
**characterized in that**
the battery management module (18) comprises a total capacity summarizer (16).

3. Multi-battery adapter (10) according to any one of the preceding claims,
**characterized in that**
the drive unit connector (26) and the battery connectors (22, 24) are configured to be mechanically complementary to each other.

4. Electric bicycle comprising
a drive unit (60),
at least two traction batteries (40, 50) and
a multi-battery adapter (10) according to any one of claims 1 to 3.

## Revendications

1. Adaptateur multi-batterie (10) pour établir une connexion électrique entre au moins deux batteries de traction (40, 50) d'une part et une unité d'entrainement (60) d'un vélo électrique d'autre part, comprenant au moins deux connecteurs de batterie (22, 24), lesdits au moins deux connecteurs de batterie (22, 24) pouvant chacun être connecté électriquement à une batterie de traction (40, 50), un premier connecteur de batterie (22) pouvant être connecté à une première batterie de traction (40) et un deuxième connecteur de batterie (24) étant connecté à une deuxième batterie de traction (50),
une unité de commande (12) avec un module de gestion de batterie (18) indépendant, ledit module de gestion de batterie (18) pouvant être connecté à la première batterie de traction (40) et la deuxième batterie de traction (50) par un câble de signal (46, 56) respectif dudit adaptateur multi-batterie (10), et
un commutateur d'alimentation (12), ledit commutateur d'alimentation (12) pouvant être commandé par ledit module de gestion de batterie (18) d'une telle manière qu'une connexion d'alimentation électrique (66) entre l'unité d'entrainement (60) et la première batterie de traction (40) et/ou la deuxième batterie de traction (50) peut être établie,
**caractérisé en ce que**
ledit adaptateur multi-batterie (10) comprend un connecteur d'unité d'entrainement (26) pouvant être connecté électriquement à ladite unité d'entrainement (60), et ledit module de gestion de batterie (18) pouvant être connecté à ladite unité d'entrainement (60) par un seul câble de signal de ladite unité d'entrainement (68) dudit adaptateur multi-batterie (10).

2. Adaptateur multi-batterie (10) selon la revendication 1,
**caractérisé en ce que**
ledit module de gestion de batterie (18) présent un sommateur de capacité totale (16).

3. Adaptateur multi-batterie (10) selon l'une quelconque des revendications précédentes,
**caractérisé en ce que**
ledit connecteur d'unité d'entrainement (26) et les connecteurs de batterie (22, 24) sont réalisés de manière mécaniquement complémentaire l'un à l'autre.

4. Vélo électrique avec
une unité d'entrainement (60),
au moins deux batteries de traction (40, 50) at
un adaptateur multi-batterie (10) selon l'une quelconque des revendications 1 à 3.
